# FASCICULE DE BREVET EUROPEEN

(11) **EP 3 483 136 B1**
(45) Date de publication et mention de la délivrance du brevet: **16.08.2023**
(21) Numéro de dépôt: 18205197.9
(22) Date de dépôt: 08.11.2018
(51) Int. Cl.: C05D 9/02, C05G 3/00

(54) **COMPOSITION BIOSTIMULANTE POUR LA STIMULATION DE LA FLORE MICROBIENNE DES SOLS, COMPOSITION FERTILISANTE LA COMPRENANT, PROCÉDÉS DE PRÉPARATION ET D APPLICATION ET UTILISATIONS ASSOCIÉES**
BIOSTIMULIERENDE ZUSAMMENSETZUNG FÜR DIE STIMULIERUNG DER MIKROBIELLEN FLORA VON BÖDEN, DÜNGERZUSAMMENSETZUNG, DIE SIE ENTHÄLT, SOWIE ENTSPRECHENDE HERSTELLUNGS- UND ANWENDUNGSVERFAHREN
BIOSTIMULATING COMPOSITION FOR STIMULATING SOIL MICROBIAL FLORA, FERTILISER COMPOSITION COMPRISING THE SAME, METHODS OF PREPARATION AND APPLICATION AND USES THEREOF

(30) Priorité: 10.11.2017 FR 1760618
(43) Date de publication de la demande: 15.05.2019
(73) Titulaire: BIO3G, 22230 Merdrignac (FR)
(72) Inventeur: GUILLERMOU, Marc, 44250 Saint Brévin l'Océan (FR); KLARZYNSKI, Olivier, 22400 ANDEL (FR); HENRIOT, Morgane, 35000 RENNES (FR); JAMET, Claire, 35740 Pacé (FR)
(74) Mandataire: Vidon Brevets & Stratégie

(56) Documents cités:
- WO-A2-2014/016751
- CN-A- 105 801 312
- CN-A- 105 993 460

## Description

### 1. Domaine de l'invention

Le domaine de l'invention est celui des compositions biostimulantes. Plus précisément l'invention concerne des compositions biostimulantes permettant l'amélioration de l'absorption par les végétaux des nutriments issus de sols, notamment de sols destinés à l'agriculture ou de sols destinés aux espaces verts. L'invention concerne également des compositions fertilisantes comprenant ces compositions biostimulantes, des procédés de préparation et d'application et des utilisations associées.

### 2. Art antérieur

Une matière fertilisante est destinée à assurer ou à améliorer la nutrition des végétaux ainsi que les propriétés physiques, chimiques et biologiques des sols. Parmi les matières fertilisantes se trouvent les engrais, les amendements, leurs mélanges.

Les engrais sont des produits qui apportent aux végétaux des éléments nutritifs nécessaires à leur croissance. Ils peuvent être de type organique ou minéraux. Il est généralement considéré que les éléments nutritifs peuvent être divisés en éléments de base, en éléments secondaires et en oligo-éléments. Les éléments de base - également appelés macronutriments - sont l'azote (N), le phosphore (P) et le potassium (K). Les éléments secondaires sont notamment le calcium (Ca), le soufre (S) et le magnésium (Mg). Les oligo-éléments sont notamment le fer (Fe), le manganèse (Mn), le molybdène (Mo), le cuivre (Cu), le bore (B), le zinc (Zn), le chlore (Cl), le sodium (Na), le cobalt (Co), le vanadium (V) et le silicium (Si).

Les amendements sont des produits qui permettent à titre principal d'améliorer la qualité des sols, notamment du point de vue de la structure et de l'acidité. Ils contiennent souvent en outre des quantités non négligeables d'éléments nutritifs.

Les biostimulants sont des produits de natures très diverses principalement utilisés pour améliorer la production des cultures végétales. Leurs modes d'action sont variés et souvent difficiles à mettre en évidence. La très grande majorité des biostimulants développés à ce jour vise directement le végétal en tant que tel. Parmi les effets bénéfiques des biostimulants sur le végétal peuvent être cités : la résistance aux stress abiotiques, l'amélioration de la croissance et du développement du végétal ou encore une meilleure absorption des nutriments par le végétal. Contrairement aux engrais, leur contenu en nutriments n'est généralement pas à l'origine des effets bénéfiques observés.

Il est connu que les micro-organismes présents dans les sols agricoles, tels les bactéries ou les champignons, peuvent avoir un impact considérable pour les productions végétales (Altieri M.A., 1995). En effet, ils joueraient un rôle clé dans 80 à 90% des processus géochimiques (notamment les cycles du carbone, de l'azote, du soufre et du phosphore) observés dans le sol (Nannipieri et al., 2003), ainsi que dans la transformation de la matière organique du sol. Dans le cas du cycle de l'azote, les micro-organismes seraient impliqués en particulier dans la minéralisation de l'azote, notamment via la transformation de composés organiques comprenant de l'azote en ammonium et en nitrate. Or, l'ammonium et les nitrates sont des formes de l'azote directement assimilables par le végétal. En particulier, ce sont les micro-organismes du sol qui transforment en azote minéral, l'azote initialement contenu dans l'urée grâce à l'action de l'enzyme microbienne uréase. En outre, les micro-organismes du sol catalysent la minéralisation de la matière organique grâce à un ensemble de réactions en chaîne. De ce fait, ils sont directement impliqués dans la mise à disposition des nutriments aux plantes. Des engrais combinant différents produits fertilisants sont connus par exemple de la publication CN 105 801 312 A qui divulgue un engrais pour la vigne comprenant environ entre 2 et 3% d'acide ascorbique, entre 0,5 et 1% de borate de sodium, entre 2 et 3,5% de poudre de pomme de terre. Cet engrais comprend également des engrais minéraux tels que du phosphate de calcium et de magnésium, du phosphate de potassium, du molybdate d'ammonium et du phosphate d'ammonium, des engrais organiques tels que des résidus de digestion anaérobique, des résidus de fermentation de manioc, de la poudre de soja.

Les producteurs agricoles sont constamment à la recherche de techniques agricoles permettant d'améliorer - tant sur le plan qualitatif que quantitatif - leurs récoltes. Il y a également une volonté de préserver les ressources naturelles, et de limiter la pollution des sols par utilisation excessive de compositions fertilisantes. Les consommateurs sont également de plus en plus attentifs à la qualité des produits et à leur culture de manière raisonnée et responsable.

Ainsi, les producteurs sont à la recherche de compositions, notamment des compositions alternatives aux compositions fertilisantes, permettant une amélioration de l'absorption par les végétaux des nutriments issus des sols. En particulier, il y a un besoin pour la fourniture de compositions, permettant de stimuler l'activité et le développement des micro-organismes de ces sols. Ainsi, dans une démarche éco-responsable favorable à la préservation des ressources naturelles, il y a un besoin pour la fourniture de compositions permettant d'améliorer le rendement des récoltes sans augmenter, voire même en diminuant, la quantité de matière fertilisante administrée.

### 3. Objectifs de l'invention

Un objectif de la présente invention est de fournir une composition biostimulante, ou une composition fertilisante la comprenant, permettant une amélioration de l'absorption par les végétaux des nutriments issus des sols, en particulier des sols destinés à l'agriculture ou des sols destinés aux espaces verts.

Un objectif de l'invention est notamment de fournir une composition biostimulante, ou une composition fertilisante la comprenant, permettant de stimuler l'activité et le développement des micro-organismes de ces sols.

Un autre objectif de la présente invention est de fournir, dans au moins certains modes de réalisation, une composition biostimulante, ou une composition fertilisante la comprenant, permettant d'améliorer l'efficacité de matières fertilisantes, notamment des engrais et/ou amendements organiques et/ou minéraux, sur des récoltes. En particulier, un objectif de l'invention est de fournir une composition biostimulante ou une composition fertilisante la comprenant, permettant d'améliorer le rendement d'une récolte sans augmenter, voire en diminuant, la quantité de matière fertilisante administrée.

L'invention a également pour objectif de proposer un procédé de préparation, un procédé d'application et des utilisations associées.

### 4. Exposé de l'invention

Ces objectifs, ainsi que d'autres qui apparaîtront par la suite, sont atteints à l'aide d'une composition biostimulante permettant la stimulation de la flore microbienne des sols, notamment des sols destinés à l'agriculture ou des sols destinés aux espaces verts. La composition biostimulante, selon la présente invention, comprend :
un composé présentant un motif ascorbate ;
un sel de bore ; et,
un polysaccharide apte à gélifier par absorption d'eau; et,
un additif choisi parmi une argile, un carbonate de calcium et/ou de magnésium , une silicone, un lithothamne ou leur mélange.

Au sens de la présente invention, on entend par « biostimulante » une composition dont la fonction est de stimuler des processus naturels d'un végétal, notamment d'augmenter l'absorption des nutriments, indépendamment du contenu en nutriments de la composition.

On entend par « stimulation de la flore microbienne», une augmentation de l'activité métabolique des micro-organismes présents dans le sol, notamment une augmentation de leur activité enzymatique, permettant en particulier la minéralisation de la matière organique du sol.

On entend par « sol » un support destiné au développement d'un végétal. Le sol peut éventuellement être enrichi en matières organiques par épandage d'une matière fertilisante, tel un engrais ou un amendement.

On entend par « espace vert » un espace d'agrément végétalisé, notamment engazonné, arboré, planté de fleurs et d'arbres et/ou de buissons d'ornement.

La composition biostimulante selon la présente invention a été obtenue par méthode de criblage moléculaire. Les inventeurs ont alors mis en évidence que la combinaison spécifique d'un composé présentant un motif ascorbate, d'un sel de bore et d'un polysaccharide apte à gélifier par absorption d'eau permettait de manière étonnante de stimuler le développement et l'activité de la flore microbienne des sols, d'augmenter la minéralisation des matières organiques contenues dans ces sols et in fine d'améliorer la qualité et les rendements de cultures. A contrario, ils ont également démontré qu'un composé présentant un motif ascorbate seul, un sel de bore seul ou encore un polysaccharide apte à gélifier par absorption d'eau seul ne permettait pas d'obtenir de tels effets de manière significative.

Les inventeurs ont alors postulé que la combinaison particulière des éléments constitutifs de la composition selon la présente invention sont nécessaires à l'activation de certaines voies métaboliques de la flore microbienne impliquées dans la minéralisation de la matière organique. Les nutriments ainsi formés sont directement assimilables par les végétaux, ce qui favorise leur bon développement et leur croissance.

La composition selon l'invention ne constitue en aucun cas un substituant à une matière fertilisante, tel un engrais ou un amendement. En effet, la quantité en nutriments pour un végétal apportée par la composition est négligeable. La composition biostimulante peut cependant être utilisée en complément d'une matière fertilisante afin d'en potentialiser les effets sur les végétaux. Ainsi, à rendement de culture égal, une moindre quantité de matière fertilisante peut être appliquée à une culture sur laquelle est également appliquée la composition biostimulante de l'invention par rapport à une culture sur laquelle n'est pas appliquée la composition biostimulante selon l'invention. Autrement dit, à quantité égale de matière fertilisante appliquée sur une culture, le rendement d'une culture sur laquelle a été appliquée la composition biostimulante selon l'invention sera meilleur que le rendement d'une culture sur laquelle n'a pas été appliquée la composition biostimulante selon l'invention.

La composition selon l'invention comprend un composé présentant un motif ascorbate. Le composé présentant un motif ascorbate peut notamment être choisi parmi l'acide ascorbique, un de ses isomères de configuration, un de ses sels, un de ses hydrates ou leurs mélanges. Le composé présentant un motif ascorbate est de préférence choisi parmi l'acide ascorbique ou l'ascorbate de sodium.

L'acide ascorbique possède deux carbones asymétriques, donc quatre isomères de configuration. « Acide ascorbique » signifie dans le langage courant « acide-L-ascorbique », ce qui correspond à la molécule de vitamine C. Les isomères de configuration de l'acide-L-ascorbique sont l'acide-D-ascorbique, l'acide-L-isoascorbique et l'acide-D-isoascorbique. L'acide ascorbique peut notamment se présenter sous forme d'un mélange énantiomérique d'acide-L-ascorbique et d'acide-D-ascorbique.

L'acide ascorbique est un diacide (pKa1 de 4,1 et pKa2 de 11,8). Il peut donc se présenter sous la forme de sel d'ascorbate. On entend par « sel » un composé chimique formé d'un anion (ici l'ascorbate) et d'un cation, sans charge nette. Le cation peut notamment être choisi parmi un cation ammonium, un cation calcium, un cation fer, un cation magnésium, un cation potassium, un cation pyridinium, un cation sodium, un cation lithium et un cation ammonium quaternaire. Le cation est de préférence un cation sodium, le sel résultant étant l'ascorbate de sodium. L'ascorbate de sodium est aussi connu sous le nom d'ascorbate monosodique ou de monosodium ascorbate. Un hydrate de sel d'ascorbate peut être éventuellement formé en présence de molécules d'eau.

La composition selon l'invention comprend également un sel de bore. On appelle sel de bore un sel comprenant l'élément bore. Le sel de bore peut notamment être un sel de borate. De préférence le sel de bore est du tétraborate de sodium, du métaborate de potassium ou leur mélange.

Le terme borate désigne un ensemble de composés moléculaires constitués d'atomes de bore et d'oxygène.

Parmi les borates se trouve l'ion tétraborate B₄O₇²⁻, à structure tricyclique. Le sel de tétraborate de sodium est notamment connu sous sa forme décahydratée, comme étant le minéral « borax ».

Parmi les borates se trouve également l'ion métaborate B0₂⁻. Un sel de métaborate peut être formé notamment par l'association avec un cation Na⁺, un cation Mg²⁺ ou encore un cation Ca²⁺.

La composition selon l'invention comprend également un polysaccharide apte à gélifier par absorption d'eau (ou polysaccharide gélifiant). Un polysaccharide est un polymère formé de plusieurs monosaccharides (ou oses) ayant pour formule générale Cₓ(H₂O)_{y} où x>3 et où généralement y=x-1. Il est bien connu de l'Homme de l'Art que certains polysaccharides présentent des capacités accrues de rétentions d'eau et sont aptes à s'organiser tridimentionnellement pour former des gels avec l'eau. Le polysaccharide apte à gélifier par absorption d'eau a pour intérêt de permettre une bonne hydratation de la composition en présence d'eau, une bonne humidité du sol favorisant le développement de la flore microbienne du sol.

Le polysaccharide apte à gélifier par absorption d'eau peut notamment être du xanthane, du carraghénane, de l'alginate, de la pectine, du galactomannane (notamment issu de gomme de guar) ou leur mélange. Le polysaccharide apte à gélifier par absorption d'eau est de préférence du xanthane.

Le xanthane, aussi connu sous le nom de « gomme xanthane », est un polysaccharide apte à gélifier par absorption d'eau constitué d'une combinaison de quatre oses : le glucose, le mannose, l'acide glucoronique et l'acide pyruvique.

La composition biostimulante selon l'invention-comprend de la composition :
0.1% à 10% du composé présentant un motif ascorbate;
0.1% à 10% du sel de bore; et,
0.05% à 5% du polysaccharide apte à gélifier par absorption d'eau; et, de 75% à 99,75% d'un additif choisi parmi une argile, un carbonate de calcium et/ou de magnésium, une silicone, un lithothamne ou leur mélange.

De manière davantage préférée, la composition peut comprendre, en poids total de la composition :
1% à 6% du composé présentant un motif ascorbate;
1% à 6% du sel de bore; et,
0,05% à 3% du polysaccharide apte à gélifier par absorption d'eau.

La composition biostimulante selon l'invention comprend également un additif et peut comprendre aussi un agent texturant, un agent conservateur, un agent auxiliaire de granulation, un agent dispersant, un agent tensio-actif ou leurs combinaisons.

L'additif a pour effet d'augmenter le poids de la composition biostimulante afin que cette dernière puisse facilement être pesée pour être utilisée avec un dosage adapté.

Selon l'invention l'additif est choisie parmi une argile, un carbonate de calcium et/ou de magnésium, une silicone, un lithothamne ou leurs mélanges. l'additif représente de 75% à 99,75% en poids total de la composition selon l'invention. De manière préférée, l'additif peut représenter de 85% à 97,95% en poids total de la composition.

Un agent texturant a pour effet de modifier la texture de la composition biostimulante. De préférence, l'agent texturant est choisi parmi un lignosulfonate, une vinasse, une pulpe végétale, un tourteau végétal, un marc végétal ou leur mélange. L'agent texturant peut représenter de 0,1% à 10% en poids de la composition selon l'invention.

Un agent conservateur a pour effet de s'opposer aux altérations d'origines physiques, chimiques ou microbiologiques de la composition biostimulante. De préférence, l'agent conservateur est choisi parmi un méthyl paraben, un acide organique autre que l'acide ascorbique, tel un sel de sorbate ou de citrate, ou leur mélange. L'agent conservateur peut représenter de 0,01 à 5% en poids de la composition selon l'invention.

Un agent auxiliaire de granulation a pour effet de favoriser la formation de grains. Un agent auxiliaire de granulation est donc avantageusement utilisé dans les cas où il est souhaité que la composition se présente sous forme de granulés.

Un agent dispersant permet de faciliter la suspension de particules lorsque la composition se trouve en solution.

Un agent tensio-actif permet de modifier la tension superficielle de la composition.

La composition biostimulante selon l'invention peut notamment se présenter sous forme de poudre ou de granulés. Ceci a pour intérêt de faciliter les opérations de pesée et le dosage de la composition. Ceci a également pour intérêt de permettre d'incorporer facilement et de manière homogène la composition biostimulante à une matière fertilisante.

Selon un second aspect, l'invention concerne une composition fertilisante comprenant :
une matière fertilisante ; et
une composition biostimulante pour la stimulation de la flore microbienne d'un sol, telle que ci-dessus décrite.

La matière fertilisante est destinée à assurer ou à améliorer la nutrition des végétaux ainsi que les propriétés physiques, chimiques et biologiques des sols. Parmi les matières fertilisantes se trouvent les engrais, les amendements, leur mélange. La matière fertilisante peut notamment être choisie parmi les engrais minéraux ou organiques et/ou les amendements minéraux ou organiques. L'incorporation de la composition biostimulante avec une matière fertilisante permet d'augmenter l'efficacité de cette matière fertilisante auprès de cultures. En effet, la composition biostimulante permet de stimuler la flore microbienne du sol qui, à son tour, permet d'augmenter la quantité de nutriments directement assimilable par les végétaux par décomposition de la matière fertilisante.

La matière fertilisante peut comprendre un engrais organique, comme par exemple de la farine de viande ou encore de la fiente de volaille. La matière fertilisante peut également comprendre un amendement organique, comme par exemple du fumier, du compost ou encore de la pulpe végétale. Dans le cas où la matière fertilisante est organique, la flore microbienne va accélérer la mise à disposition de nutriments organiques et minéraux pour le végétal.

La matière fertilisante peut comprendre un engrais minéral, comme par exemple de l'ammonitrate, de l'urée, ou encore un engrais du type NPK. La matière fertilisante peut également comprendre un amendement minéral, comme par exemple du carbonate de calcium, de la craie ou encore du lithothamne. Dans le cas où la matière fertilisante est minérale, la flore microbienne va accélérer la mise à disposition de nutriments minéraux pour le végétal.

Avantageusement, la composition fertilisante selon l'invention comprend, en poids total de ladite composition fertilisante :
85% à 99,99%, de préférence de 90% à 99,9%, de la matière fertilisante ; et,
0,01% à 15%, de préférence de 0,1% à 10%, de la composition biostimulante.

Selon un troisième aspect, l'invention concerne un procédé de préparation de la composition fertilisante précédemment décrite. Le procédé comprend une étape de mélange de la composition biostimulante avec ladite matière fertilisante. De préférence, la composition biostimulante est mélangée à la matière fertilisante avec un ratio composition biostimulante/matière fertilisante compris entre 1:9000 et 1:9.

Le procédé peut également comprendre une étape supplémentaire de compactage, granulation et/ou bouchonnage.

Selon un quatrième aspect, l'invention concerne un procédé d'application de la composition biostimulante ci-dessus décrite ou d'une composition fertilisante la comprenant. Le procédé d'application comprend l'épandage d'une dose comprise entre 1 gramme et 1500 kilogrammes par hectare de composition biostimulante. De préférence, le procédé d'application comprend l'épandage d'une dose comprise entre 10 grammes et 1000 kilogrammes par hectare de composition biostimulante.

L'épandage de la composition selon la présente invention ou d'une composition fertilisante la comprenant peut être faite en plein ou en localisé, au semis ou au pied de la plante.

Selon un cinquième aspect, l'invention concerne une utilisation de la composition biostimulante telle que décrite ci-dessus, ou d'une composition fertilisante la comprenant, pour la culture de plantes choisies parmi le groupe des céréales à paille, du maïs, du riz, du colza, de la pomme de terre, de la betterave, du tournesol, de la vigne, des arbres fruitiers, des légumes feuilles, des légumes racines, des espèces végétales de prairie, du gazon et des végétaux d'ornement.

On inclut dans le groupe des « céréales à paille » notamment le blé, l'orge, l'avoine, le triticale et le seigle.

On entend par « légumes feuilles » les légumes dont la partie consommée correspond à la feuille de la plante. On inclut dans ce groupe notamment l'endive, l'épinard, la blette, les choux ou crucifères, la salade comme la laitue, la roquette, la mâche, la scarole, la laitue Iceberg, la feuille de chêne, le cresson, l'oseille et le ndolé.

On inclut dans le groupe des « légumes racines » notamment les carottes, le radis, le panais, le topinambour, le poireau, le navet, le céleri, les oignons et l'ail.

Selon un sixième aspect, l'invention concerne une utilisation de la composition biostimulante décrite ci-dessus, ou d'une composition fertilisante la comprenant, pour stimuler l'activité uréase de micro-organismes du sol. Cette utilisation est particulièrement adaptée pour des sols riches ou enrichis en urée.

### 5. Description de modes de réalisation de l'invention

La composition selon l'invention est une combinaison de sélection. En effet, la combinaison spécifique d'un composé présentant un motif ascorbate, d'un sel de bore et d'un polysaccharide apte à gélifier par absorption d'eau, permet, comme il est démontré par les expériences ci-dessous de stimuler la flore microbienne du sol. Cette stimulation des micro-organismes du sol a pour effet de potentialiser l'action des matières fertilisantes apportées aux cultures, en accélérant leur décomposition en nutriments directement assimilables. La composition est ainsi qualifiée de biostimulante, abrégé dans la suite de la description par le terme « BST ».

Au niveau des cultures, l'épandage de composition BST a notamment pour effet une augmentation de la rapidité de croissance des végétaux, une augmentation du nombre de feuilles des végétaux, une augmentation de la quantité de protéines dans les graines ou encore une augmentation du rendement de récolte.

### 5.1- Composition BST

Une composition biostimulante a été préparée par mélange de matières premières dans les proportions présentées dans le tableau 1 ci-dessous :

**Tableau 1**

| **Matière première** | **Quantité incorporée en % m/m** |
|---|---|
| Gomme xanthane | 1,0 |
| Charge minérale (poudre de coquilles) d'huitres | 93,0 |
| Borax décahydrate | 4,0 |
| Acide ascorbique | 2,0 |
| *TOTAL* | 100,0 |

### 5.2- Procédé de fabrication de la composition BST

Toutes les matières premières ont d'abord été pesées puis introduites dans une cuve munie d'une hélice de brassage. Les matières premières ont été versées dans la cuve après avoir mis l'hélice de brassage en route à vitesse lente. L'ensemble a ensuite été brassé.

Après 20 minutes de brassage, l'homogénéité du mélange a été vérifiée par contrôle visuel. Le mélange a été conditionné en sacs de 25kg ou en *big-bag* de 500 kg.

### 5.3- Compositions fertilisantes contenant la composition BST et procédé de fabrication

La composition BST peut être incorporée à une matière fertilisante pour former une composition fertilisante. La composition BST peut notamment représenter de 0.01% à 10% en poids de la composition fertilisante. La matière fertilisante peut être un engrais minéral, engrais organique, amendement minéral et amendement organique.

Cette incorporation est réalisée lors de la constitution du mélange de matières premières, avant la transformation de la composition en produit commercialisable (mélange seul, bouchonnage, granulation, compactage, etc).

### 5.4- Mise en évidence de la stimulation de la minéralisation de la matière organique

Les micro-organismes du sol dégradent la matière organique du sol afin d'obtenir l'énergie et les nutriments dont ils ont besoin pour leur survie et leur croissance. Ces éléments sont libérés secondairement et peuvent servir pour la croissance végétale. Au cours de ce processus, le carbone organique constituant la matière organique est minéralisée en dioxyde de carbone (CO₂). Il est communément admis que la mesure de la minéralisation de la matière organique, par la mesure du dégagement de COz dans des enceintes hermétiques, permet de mesurer le niveau d'activité des micro-organismes du sol. Ce type de mesures a ici été réalisé pour comparer l'efficacité de différentes compositions sur l'activité des micro-organismes du sol.

Une cinétique de mesure du COz gazeux a été réalisée dans des récipients contenant des quantités équivalentes de terre et de paille d'orge.

La terre de référence, qui a été utilisée, présente les caractéristiques suivantes :
- Texture limoneuse (15% d'argile, 57% limons, 26% sables) ;
- pH eau : 6.7 ;
- Matière organique : 1.7 % ; et,
- Rapport C/N : 11.

La paille d'orge, qui a été utilisée, présente les caractéristiques suivantes :
- Matière sèche = 91.7 % sur brut ;
- Matière organique = 87.8 % sur brut ;
- Carbone organique = 43.9 % sur brut ; et,
- Rapport C/N = 108.

Ces valeurs sont tout à fait représentatives d'une paille de céréales.

La paille a été séchée et broyée à 1 mm puis incorporée à la terre (50 mg de carbone provenant de la paille dans 25 g de sol équivalent terre sèche). Cela représente un apport de 13 à 14 tonnes (t) de paille par hectare (ha) sur 25 cm de profondeur (pour 3000 t de terre / ha). Cet ordre de grandeur est cohérent avec les pratiques agricoles lorsque les pailles sont restituées au sol.

Cinq échantillons ont été testés : i) terre + paille + eau , ii) terre + paille + composition BST ci-dessus préparée (cf. §5.2) (dosage BST : 2kg/ha) ; iii) terre + paille + acide ascorbique (Asc) (Dosage Asc : 40g/ha) ; iv) terre + paille + Borax (B) (Dosage B : 8.8 g/ha) ; v) terre + paille + xanthane (Xan) (dosage Xan : 20g/ha).

Chacun de ces mélanges a été placé dans des récipients hermétiques avec un pilulier de soude (pour piéger le dégagement de CO2) et un pilulier d'eau déminéralisée (pour maintenir un taux d'hygrométrie élevé dans le bocal). Le tout a été mis à incuber dans l'obscurité à 28°C pendant 49 jours. Le pilulier de soude a été remplacé à intervalles réguliers, permettant ainsi de doser le CO2 piégé dans la soude et de calculer la quantité de carbone minéralisé dans chaque condition à tester. Sept points de mesures ont été réalisés à différents jours d'incubation (j3, j7, j14, j21, j28, j42, j49).

Trois réplicas de mesure ont été réalisés. Un bocal sans terre ni produit a également été mis en place afin de mesurer le CO2 provenant de l'air ambiant (blanc de mesure).

Les coefficients de minéralisation (en pourcentage du carbone organique de la paille d'orge) des cinq échantillons au cours du temps sont présentés dans le tableau 2 ci-dessous :

**Tableau 2**

| | | Coefficient de minéralisation en % du C_{org} de la paille d'orge | | | | | | |
|---|---|---|---|---|---|---|---|---|
| | Jours après incubation | 3 | 7 | 14 | 21 | 28 | 42 | 49 |
| terre + paille (témoin) | Moyenne 3 mesures | 11,9 | 24,1 | 34,1 | 43,9 | 52,9 | 64,5 | 68,2 |
| | *Ecart type* | 0,2 | 0,2 | 0,5 | 1,4 | 2,4 | 3,2 | 3,7 |
| terre + paille + composition BST | Moyenne 3 mesures | 21,79 | 41,41 | 55,95 | 67,70 | 75,04 | 84,04 | 87,89 |
| | *Ecart type* | 0,21 | 1,42 | 2,08 | 2,72 | 2,98 | 4,03 | 5,34 |
| terre + paille + Asc | Moyenne 3 mesures | 12,07 | 23,91 | 34,47 | 45,73 | 54,76 | 65,85 | 69,41 |
| | *Ecart type* | 0,78 | 1,10 | 1,38 | 1,96 | 2,36 | 2,63 | 2,57 |
| terre + paille + B | Moyenne 3 mesures | 11,96 | 23,67 | 33,06 | 44,02 | 54,36 | 64,06 | 68,54 |
| | *Ecart type* | 0,73 | 0,91 | 1,00 | 0,87 | 2,31 | 0,88 | 1,62 |
| terre + paille + Xan | Moyenne 3 mesures | 12,25 | 25,02 | 35,22 | 45,81 | 54,61 | 65,56 | 69,13 |
| | *Ecart type* | 0,64 | 0,93 | 1,45 | 1,35 | 1,26 | 1,51 | 1,68 |

Les résultats obtenus montrent que la composition BST induit une augmentation de la minéralisation du carbone organique ce qui indique une augmentation de l'activité microbienne du sol. En revanche, les constituants de cette composition ne sont pas actifs lorsqu'ils sont apportés seuls en complément de la terre et de la paille. La composition BST selon l'invention permet donc de stimuler l'activité des micro-organismes du sol de façon très significative et par un effet de synergie entre les différents constituants.

### 5.5 Mise en évidence de la stimulation de l'activité uréase

L'urée est une forme d'engrais azoté minéral fréquemment utilisé pour la fertilisation des cultures. Pour pouvoir être utilisé comme nutriment par les cultures végétales, cet engrais doit être transformé dans les sols selon la réaction suivante :

H₂N-CO-NH₂ + H₂O → 2NH₃ + CO₂

Cette réaction est catalysée par une enzyme, l'uréase, qui est produite par des micro-organismes du sol (Skujins, 1967; Kuprevich et Shcherbakova, 1971). Le niveau d'activité uréase dans les sols est donc très important pour l'efficacité de la stratégie de fertilisation azotée.

Compte tenu des résultats de l'expérimentation précédente (cf. §5.4), les inventeurs ont souhaité déterminer si la stimulation des micro-organismes du sol conduisait à une augmentation de l'activité uréase. Ils ont réalisé les mesures suivantes pour comparer l'efficacité de différentes compositions sur cette activité biologique.

La méthode utilisée est celle décrite par Kandeler et Gerber (1988).

La terre utilisée dans cet essai possède les caractéristiques suivantes :
- argile : 179 g/kg
- pH eau : 6.1
- azote total : 1.98 g/kg
- azote minéral : 85.4 mg/kg
- carbone organique : 18.7 g/kg

La terre a été tamisée à travers un tamis de mailles de 2 mm puis mise à préincuber pendant 24h.

L'essai comporte 5 modalités avec 4 répétitions/modalité : i) 50 g de terre + eau osmosée (super témoin) ; ii) 50 g de terre + carbonate de calcium à 2 mg/g de sol (témoin sans BST). Pour les trois modalités suivantes, la composition BST telle que préparée au paragraphe 5.3 est incorporée à la concentration massique de 1% à du carbonate de calcium. Ce mélange est ensuite appliqué au sol à 3 doses : iii) 0.1 mg/g de sol ; iv) 0.5 mg/g de sol ; et, v) 2 mg/g de sol

Les différents produits à tester ont été apportés avec 12 mL d'eau déionisée (50% de la capacité de rétention en eau maximale de la terre). Ensuite, la terre a été mise à incuber pendant 48h à 28°C.

L'analyse de l'activité uréase a ensuite été réalisée par quantification colorimétrique de l'ammonium produit via la réaction :

H2N-CO-NH2 + H2O → 2NH3 + CO2

Une même quantité d'urée a été ajoutée à chaque mélange réactionnel et la quantification a été réalisée après 2 heures à 37°C.

Les résultats pour les cinq modalités sont présentés dans le tableau 3 ci-dessous :

**Tableau 3**

| Modalités | Concentrati on en ammonium | Pourcentage de différence par rapport au témoin | Groupes homogènes * |
|---|---|---|---|
| Témoin eau avec urée | 0.722 | - | d |
| Carbonate de calcium à 2 mg/g | 0.727 | 0.66 | d |
| Carbonate de calcium + BST à 0.1 mg/g | 0.769 | 6.56 | c |
| Carbonate de calcium + BST à 0.5 mg/g | 0.799 | 10.69 | b |
| Carbonate de calcium + BST à 2 mg/g | 0.909 | 25.96 | a |

| | | | |
|---|---|---|---|
| * test de Newman-Keuls à 5% | | | |

Après 2 jours d'incubation, la modalité selon laquelle seul du carbonate de calcium à 2 mg/g est utilisé (modalité ii) ne permet pas d'augmenter significativement la concentration en ammonium par rapport aux échantillons de sols témoins (modalité i). L'apport du biostimulant BST permet d'augmenter significativement les concentrations en ammonium, quelles que soient les doses testées. De plus, il existe un effet dose significatif du biostimulant BST entre 0.1, 0.5 et 2 mg/g.

Ainsi, l'effet positif et significatif observé sur la production d'ammonium s'explique par la présence de la composition BST. Celui-ci a permis de mettre en évidence l'augmentation de l'activité uréase (dès 0.1 mg/g) via l'augmentation de l'activité biologique du sol.

### 5.6- Essai en champs de la composition BST en mélange avec un engrais minéral sur maïs et sur prairie

Des essais ont été réalisés sur maïs et sur prairie. Ils avaient pour objectif de mesurer les effets de la composition BST telle que préparée selon le paragraphe 5.1 sur l'efficacité d'un engrais minéral azoté. La composition a été introduite dans la formule de cet engrais à la dose de 1% m/m. Les effets du mélange ainsi obtenus ont été comparés aux effets de l'engrais d'origine sur le rendement, la qualité des grains et des fourrages récoltés.

L'engrais azoté minéral, qui a été utilisé, présente les caractéristiques suivantes (en brut de la masse):
Azote : 4%
CaO: 20 % ;
MgO : 4% ; et,
SO3: 10%

### - Etude sur maïs

Des essais sur maïs ont été mis en place sur 3 parcelles implantées dans des zones géographiques différentes. Ce sont des essais en bandes alternées avec 3 répétitions pour chaque modalité.

Deux modalités ont été mises en place : i) Engrais minéral azoté d'origine à 200kg/Ha (témoin) et ii) Engrais minéral + composition BST (engrais minéral azoté d'origine à 200kg/Ha complété par le complexe BST à la dose de 1% (m/m)).

Les apports ont été réalisés sur l'ensemble des parcelles entre le 11 et 26 mai.

Lorsque les plants ont atteint 35% d'humidité, une récolte a été réalisée. Les teneurs en protéines et amidon ainsi que le poids secs et l'humidité sont déterminés.

Les résultats pour les deux modalités d'étude sur maïs sont présentés dans le tableau 4 ci-dessous :

**Tableau 4**

| | Témoin | Engrais minéral + Composition BST |
|---|---|---|
| Rendement (quintaux /Ha à 15 % d'humidité) | 97.11 | 105.74 |
| Matière azotée (% matière sèche) | 8.48 | 8.89 |
| Teneur en amidon (T sec/Ha) | 5.96 | 6.50 |

Les résultats obtenus montrent que l'apport de la composition BST permet d'améliorer l'effet fertilisant de l'engrais minéral. La récolte est en effet significativement plus importante et les critères qualitatifs prépondérants que sont les matières azotées et la teneur en amidon sont fortement améliorés.

L'apport de la composition BST permet donc d'améliorer l'efficacité de cet engrais minéral.

### - Etude sur prairie

Des essais sur prairie ont été mis en place sur 3 parcelles implantées dans des zones géographiques différentes. Ce sont des essais en bandes alternées avec 3 répétitions pour chaque modalité.

Deux modalités ont été mises en place : i) Engrais minéral azoté d'origine à 200kg/Ha (témoin) et ii) Engrais minéral + composition BST (engrais minéral azoté d'origine à 200kg/Ha complété par le complexe BST à la dose de 1% (m/m)).

Les apports ont été réalisés sur l'ensemble des parcelles entre le 03 et le 15 mars.

Trois fauches ont été réalisées sur les parcelles d'essai. Les teneurs en protéines ainsi que les facteurs UFL (Unité Fourragère Lait) et UFV (Unité Fourragère Viande) ont été déterminés.

Les résultats pour les deux modalités d'étude sur prairie sont présentés dans le tableau 5 ci-dessous :

**Tableau 5**

| | Témoin | Engrais minéral + Composition BST |
|---|---|---|
| Rendement (tonne de matière sèche /ha) | 8.2 | 9.3 |
| Protéines (g/kg matière sèche) | 361 | 365 |
| UFV /ha | 6584 | 7547 |
| UFL/ha | 6992 | 7951.3 |

Les résultats obtenus montrent que l'apport de la composition BST permet
d'améliorer l'effet fertilisant de l'engrais minéral. La récolte est en effet significativement plus importante et les critères qualitatifs prépondérant que sont les protéines et les UFL et UFV sont fortement améliorés. L'apport de la composition BST
permet donc d'améliorer l'efficacité de cet engrais minéral.

## Revendications

1. Composition biostimulante permettant la stimulation de la flore microbienne des sols, notamment des sols destinés à l'agriculture ou des sols destinés aux espaces verts, comprenant, en poids total de ladite composition :
- de 0,1% à 10 % d'un composé présentant un motif ascorbate ;
- de 0,1% à 10%, d'un sel de bore ;
- de 0,05% à 5 % d'un polysaccharide apte à gélifier par absorption d'eau ; et
- de 75% à 99,75% d'un additif choisi parmi une argile, un carbonate de calcium et/ou de magnésium, une silicone, un lithothamne ou leur mélange.

2. Composition biostimulante selon la revendication 1, **caractérisée en ce que** ledit composé présentant un motif ascorbate est choisi parmi l'acide ascorbique, un de ses isomères de configuration, un de ses sels, un de ses hydrates ou leur mélange ; de préférence, ledit composé présentant un motif ascorbate est l'acide ascorbique ou l'ascorbate de sodium.

3. Composition biostimulante selon l'une quelconque des revendications précédentes, **caractérisée en ce que** ledit sel de bore est un sel de borate ; de préférence, ledit sel de bore est du tétraborate de sodium, du métaborate de potassium ou leur mélange.

4. Composition biostimulante selon l'une quelconque des revendications précédentes, **caractérisée en ce que** ledit polysaccharide apte à gélifier par absorption d'eau est du xanthane, du carraghénane, de l'alginate, de la pectine, du galactomannane ou leur mélange; de préférence, ledit polysaccharide apte à gélifier par absorption d'eau est du xanthane.

5. Composition biostimulante selon l'une quelconque des revendications précédentes, **caractérisée en ce que** ladite composition comprend un agent texturant ; de préférence, ledit agent texturant est choisi parmi un lignosulfonate, une vinasse, une pulpe végétale, un tourteau végétal, un marc végétal ou leur mélange.

6. Composition fertilisante comprenant, en poids total de ladite composition fertilisante :
- de 90% à 99,9% d'une matière fertilisante ; et
- de 0,1% à 10% d'une composition biostimulante pour la stimulation de la flore microbienne d'un sol selon l'une quelconque des revendications 1 à 5.

7. Composition fertilisante selon la revendication 6, **caractérisée en ce que** ladite matière fertilisante est choisie parmi les engrais minéraux ou organiques et/ou les amendements minéraux ou organiques.

8. Procédé de préparation d'une composition fertilisante selon l'une quelconque des revendications 6 ou 7, ledit procédé comprenant une étape de mélange de ladite composition biostimulante avec ladite matière fertilisante.

9. Procédé d'application d'une composition biostimulante selon l'une quelconque des revendications 1 à 5, ou d'une composition fertilisante la comprenant, ledit procédé d'application comprenant l'épandage d'une dose comprise entre 1 gramme et 1500 kilogrammes par hectare, de préférence une dose comprise entre 10 grammes et 1000 kilogrammes par hectare, de ladite composition biostimulante.

10. Utilisation d'une composition biostimulante selon l'une quelconque des revendications 1 à 5, ou d'une composition fertilisante la comprenant, pour la culture de plantes choisies parmi le groupe des céréales à paille, du maïs, du riz, du colza, de la pomme de terre, de la betterave, du tournesol, de la vigne, des arbres fruitiers, des légumes feuilles, des légumes racines, des espèces végétales de prairie, du gazon et des végétaux d'ornement.

11. Utilisation d'une composition biostimulante selon l'une quelconque des revendications 1 à 5, ou d'une composition fertilisante la comprenant, pour stimuler l'activité uréase de micro-organismes du sol.

## Patentansprüche

1. Biostimulierende Zusammensetzung, die die Stimulation der Mikrobenflora von Böden, insbesondere von für die Landwirtschaft bestimmten Böden oder von für Grünanlagen bestimmten Böden, ermöglicht, die bezogen auf das Gesamtgewicht der Zusammensetzung Folgendes umfasst:
- 0,1 % bis 10 % einer ein Ascorbatmotiv aufweisenden Verbindung;
- 0,1 % bis 10 % eines Borsalzes;
- 0,05 % bis 5 % eines Polysaccharids, das durch Absorption von Wasser gelieren kann, und
- 75 % bis 99,75 % eines Additivs, ausgewählt aus einem Ton, einem Calcium- und/oder Magnesiumcarbonat, einem Silikon, einem Lithithamnium oder deren Gemisch.

2. Biostimulierende Zusammensetzung nach Anspruch 1, **dadurch gekennzeichnet, dass** die ein Ascorbatmotiv aufweisende Verbindung aus Ascorbinsäure, einem ihrer Konfigurationsisomere, einem ihrer Salze, einem ihrer Hydrate oder deren Gemisch ausgewählt ist; vorzugsweise ist die ein Ascorbatmotiv aufweisende Verbindung Ascorbinsäure oder Natriumascorbat.

3. Biostimulierende Zusammensetzung nach einem der vorhergehenden Ansprüche, **dadurch gekennzeichnet, dass** das Borsalz ein Boratsalz ist; vorzugsweise ist das Borsalz Natriumtetraborat, Kaliummetaborat oder deren Gemisch.

4. Biostimulierende Zusammensetzung nach einem der vorhergehenden Ansprüche, **dadurch gekennzeichnet, dass** das Polysaccharid, das durch Absorption von Wasser gelieren kann, Xanthan, Carrageen, Alginat, Pektin, Galactomannan oder deren Gemisch ist; vorzugsweise ist das Polysaccharid, das durch Absorption von Wasser gelieren kann, Xanthan.

5. Biostimulierende Zusammensetzung nach einem der vorhergehenden Ansprüche, **dadurch gekennzeichnet, dass** die Zusammensetzung ein Texturierungsmittel umfasst; vorzugsweise ist das Texturierungsmittel aus einem Ligninsulfonat, einer Vinasse, einer pflanzlichen Pulpe, einem pflanzlichen Presskuchen, einem pflanzlichen Trester oder deren Gemisch ausgewählt.

6. Düngemittelzusammensetzung, die bezogen auf das Gesamtgewicht der Düngemittelzusammensetzung Folgendes umfasst:
- 90 % bis 99,9 % eines Düngers und
- 0,1 % bis 10% einer biostimulierenden Zusammensetzung zur Stimulation der Mikrobenflora eines Bodens nach einem der Ansprüche 1 bis 5.

7. Düngemittelzusammensetzung nach Anspruch 6, **dadurch gekennzeichnet, dass** der Dünger aus anorganischen oder organischen Düngern und/oder anorganischen oder organischen Ergänzungsmitteln ausgewählt ist.

8. Verfahren zur Herstellung einer Düngemittelzusammensetzung nach einem der Ansprüche 6 oder 7, wobei das Verfahren einen Schritt des Mischens der biostimulierenden Zusammensetzung mit dem Dünger umfasst.

9. Verfahren zum Anwenden einer biostimulierenden Zusammensetzung nach einem der Ansprüche 1 bis 5 oder einer sie enthaltenden Düngemittelzusammensetzung, wobei das Anwendungsverfahren die Ausbringung einer Dosis zwischen 1 Gramm und 1500 Kilogramm pro Hektar, vorzugsweise einer Dosis zwischen 10 Gramm und 1000 Kilogramm pro Hektar der biostimulierenden Zusammensetzung umfasst.

10. Verwendung einer biostimulierenden Zusammensetzung nach einem der Ansprüche 1 bis 5 oder einer sie enthaltenden Düngemittelzusammensetzung für den Anbau von Pflanzen, ausgewählt aus der Gruppe mit Strohgetreide, Mais, Reis, Raps, Kartoffel, Rübe, Sonnenblume, Weinrebe, Obstbäumen, Blattgemüsen, Wurzelgemüsen, Wiesenpflanzenarten, Rasen und Zierpflanzen.

11. Verwendung einer biostimulierenden Zusammensetzung nach einem der Ansprüche 1 bis 5 oder einer sie enthaltenden Düngemittelzusammensetzung zum Stimulieren der Urease-Aktivität von Bodenmikroorganismen.

## Claims

1. A biostimulant composition for stimulating microbial flora of soils, especially soils for agriculture or soils for green spaces, comprising, based on the total weight of said composition:
- from 0.1% to 10% of a compound having an ascorbate unit;
- from 0.1% to 10% of a boron salt;
- from 0.05% to 5% of a polysaccharide capable of gelling by water absorption; and
- from 75% to 99.75% of an additive selected from a clay, a calcium and/or magnesium carbonate, a silicon, a lithothamnion or a mixture thereof.

2. The biostimulant composition according to claim 1, **characterised in that** said compound having an ascorbate unit is selected from ascorbic acid, one of its configuration isomers, one of its salts, one of its hydrates or a mixture thereof; preferably, said compound having an ascorbate unit is ascorbic acid or sodium ascorbate.

3. The biostimulant composition according to any of the preceding claims, **characterised in that** said boron salt is a borate salt; preferably, said boron salt is sodium tetraborate, potassium metaborate or a mixture thereof.

4. The biostimulant composition according to any of the preceding claims, **characterised in that** said polysaccharide capable of gelling by water absorption is xanthan, carrageenan, alginate, pectin, galactomannan or a mixture thereof; preferably, said polysaccharide capable of gelling by water absorption is xanthan.

5. The biostimulant composition according to any of the preceding claims, **characterised in that** said composition comprises a texturising agent; preferably, said texturising agent is selected from a lignosulfonate, avinasse, a plant pulp, a plant press cake, a plant marc or a mixture thereof.

6. A fertilising composition comprising, based on the total weight of said fertilising composition:
- from 90% to 99.99% of a fertilising material; and
- from 0.1% to 10% of a biostimulant composition for stimulating microbial flora of a soil according to any of claims 1 to 5.

7. The fertilising composition according to claim 6, **characterised in that** said fertilising material is selected from mineral or organic fertilisers and/or mineral or organic amendments.

8. A method for preparing a fertilising composition according to any of claims 6 or 7, said method comprising a step of mixing said biostimulant composition with said fertilising material.

9. A method for applying a biostimulant composition according to any of claims 1 to 5, or a fertilising composition comprising the same, said application method comprising spreading a dose of between 1 gramme and 1500 kilogramme per hectare, preferably a dose of between 10 grammes and 1000 kilogramme per hectare, of said biostimulant composition.

10. A use of a biostimulant composition according to any of claims 1 to 5, or of a fertilising composition comprising the same, for cultivating plants selected from the group of straw cereals, maize, rice, rapeseed, potato, beetroot, sunflower, grapevine, fruit trees, leaf vegetables, root vegetables, grassland plant species, turf and ornamental plants.

11. A use of a biostimulant composition according to any of claims 1 to 5, or of a fertilising composition comprising the same, for stimulating urease activity of microorganisms of the soil.
